# EUROPEAN PATENT APPLICATION

(11) **EP 2 580 957 A1**
(43) Date of publication of application: **17.04.2013**
(21) Application number: 10852959.5
(22) Date of filing: 08.12.2010
(51) Int. Cl.: A01G 27/02, A01G 27/00

(54) **DEVICE FOR UNPOWERED IRRIGATION AND FERTILIZATION, AND UNPOWERED POT CULTIVATION SYSTEM USING SAME**

(30) Priority: 10.06.2010 KR 20100055032; 18.08.2010 KR 20100079959; 18.08.2010 KR 20100079958; 08.11.2010 KR 20100110624
(71) Applicant: Sohn, Yong Man, Incheon 403-100 (KR)
(72) Inventor: Sohn, Yong Man, Incheon 403-100 (KR)
(74) Representative: Luppi, Emanuele
(86) International application number: PCT/KR2010/008769
(87) International publication number: WO 2011/155677

(57) **Abstract**

The present invention relates to a device for unpowered irrigation and fertilization, and to an unpowered pot cultivation system using same, which are capable of performing continuous irrigation and fertilization to a pot by using a single supply source without consuming electric or mechanical energy. The system comprises: a pot holder provided with a collecting recess in which water or a nutrient solution can be collected, and configured such that the bottom of the pot can be immersed in water; a water tank holder on which a water tank can be seated; a linking passage connecting the water tank holder to the pot holder; a valve unit mounted on the water tank so as to be opened and closed by means of the movement of a moving member; and a water level controller configured to move the moving member according to fluctuations in the water level of the collecting recess, in order to consistently maintain the water level in the collecting recess.

## Description

### CROSS-REFERENCE TO RELATED APPLICATION

This application claims the benefit of Korean Patent Application No.10-2010-0055032, filed on June 10, 2010, and No.10-2010-0079959, filed on August 18, 2010, and No.10-2010-0079958, filed on August 18, 2010, and No.10-2010-0110624, filed on November 8, 2010 in the Korean Intellectual Property Office, the disclosure of which is incorporated herein by reference.

### Technical Field

The present invention relates to a pot cultivation method, and more particularly, to a device for unpowered irrigation and fertilization, and an unpowered pot cultivation system, which are capable of performing continuous irrigation and fertilization to a pot by using a single supply source without consuming electric or mechanical energy.

### Background Art

When an unemployment problem, such as a dismissal and a reduction in the new employment by an economic recession, occurs, a new creation of jobs is needed. A development policy is needed to increase the new creation of jobs, but on the contrary to this, the development policy may accelerate the pollution and the global warming. As an embodiment, solar light, wind power, tidal power or the like are got the spotlight as an alternative energy of fossil fuel, but a large-scale development is unavoidable and the development costs an astronomical amount of money. This problem may be solved somewhat by a enterprise of a Clean Development Mechanism CDM.

On the other hand, an expansion of the green space for the relaxation and the conversation is urgent to the townspeople who live in the space surrounded by the asphalt and the concrete building. The pot cultivation increases the green space with a very low cost and an eco-friendly method even in the space, such as the asphalt, the concrete, the reclaimed land or the like, in which the satisfaction of growing condition is difficult, by using the proper irrigation and the fertilization, and thus, can gain the various optional effects (for example, a new creation of jobs, a securement of carbon emission permits by securing the green space, a reduction of air-conditioning power and the prevention of a power overload in a downtown area in summer, and an improvement of standard of living of the townspeople through the relaxation and the industrial activities in the green space).

Among the ornamental plants cultivated with the pot cultivation system, an ornamental plant having a small canopy and leaf area can grow well even though a little water is supplied at several days or several weeks. However, a fruit tree (for example, a grapevine, an actinidia arguta, or the like), which has a large canopy and leaf area, may form a shaded area larger than or equal to an area of 10m2, and have to be irrigated with much water larger than or equal to a volume of 3ℓ, many times a day.

It is easy to supply water by using a water pump with a timer, or the like, in a large-scale cultivation. However, when plants are cultivated in a home, an office, a shopping area of a market, or the like, in a small scale, it is more inconvenient to use the irrigation apparatus, and a lot of money is needed. Also, a process of supplying a lot of manure is needed depending on a growing situation (for example, a fruiting season, a growing season or the like), and for this purpose, an immediate and sufficient fertilization and management is needed.

### Disclosure of the Invention

Accordingly, the present invention is directed to provide a device for unpowered irrigation and fertilization, and an unpowered pot cultivation system using the same, which substantially obviates one or more problems due to limitations and disadvantages of the related art. An aspect of the present invention is directed to provide a device for unpowered irrigation and fertilization, and an unpowered pot cultivation system using the same, which can increase a green space with a low cost in a pot cultivation of a fruit tree having a large canopy and leaf area, without power through simple elements. To achieve these and other advantage and in accordance with the purpose of the invention, as embodied and broadly described herein, there is provided a device for unpowered irrigation and fertilization, the device including: a pot holder which is provided with a collecting recess in which water or a nutrient solution is collected, and is configured such that a bottom of the pot is immersed in water; water tank holder on which a water tank is seated; a linking passage which connects the water tank holder to the pot holder; a valve unit which is mounted on the water tank to be opened and be closed by means of the movement of a moving member; and a water level controller which is configured to move the moving member according to fluctuations in the water level of the collecting recess to consistently maintain the water level in the collecting recess.

Moreover, to achieve these and other advantage and in accordance with the purpose of the invention, as embodied and broadly described herein, there is provided an unpowered pot cultivation system, comprising: a water tank which includes a valve unit, and is able to be replaced; a pot in which a crop is planted; and a device for unpowered irrigation and fertilization which continuously supplies water or a nutrient solution contained in the water tank to the pot, wherein, the device comprises: a pot holder which is provided with a collecting recess in which water or a nutrient solution is collected, and is configured such that a bottom of the pot is immersed in water; a water tank holder on which a water tank is seated; a linking passage which connects the water tank holder to the pot holder; and a water level controller which is configured to control a opening and closing of the valve unit to consistently maintain the water level in the collecting recess, and a first rock wool layer is horizontally disposed at a bottom of the pot, and a second rock wool layer is vertically disposed at a lateral side of the pot.

Moreover, to achieve these and other advantage and in accordance with the purpose of the invention, as embodied and broadly described herein, there is provided an unpowered pot cultivation system, comprising: a plurality of pot holders which is provided with a collecting recess in which water or a nutrient solution is collected, and is configured such that a bottom of the pot is immersed in water; a connecting passage which connects each of the collecting recesses of the pot holders to each other; and a device for unpowered irrigation and fertilization which supplies the collecting recess of each of the pot holders with water or a nutrient solution through the connecting passage, wherein, the device for unpowered irrigation and fertilization comprises: a water tank holder on which a water tank is seated; and a water level controller which is formed to open or close a valve unit of the water tank such that a water level of the collecting recess is consistently maintained by supplying water or a nutrient solution to the connecting passage, and the pot holders are formed in a standardized pallet.

### Advantageous Effects

The device for unpowered irrigation and fertilization according to the present invention is capable of performing continuous irrigation during a certain period to a fruit tree, which needs irrigation many times a day, without an additional supply by using single-supply water.

The pot cultivation system according to the present invention, which may be managed without a manager, may be easily installed in a portable way in a rooftop of a downtown area, a parking lot, an empty lot of a road or the like, and has an advantage to make a green space in a short time. Furthermore, the pot cultivation system according to the present invention may decrease a cost and a time for setting up a large-scale orchard by using a standardized pot.

The present invention does not use energy for the irrigation and fertilization, and thus, is eco-friendly, and the present invention contributes to prevention of global warming.

The device for unpowered irrigation and fertilization according to the present invention is capable of performing continuous irrigation during a certain period to a fruit tree, which needs irrigation many times a day, without an additional supply by using single-supply water.

Moreover, a more eco-friendly device for unpowered irrigation and fertilization may be provided by using a mechanism for starting or stopping irrigation with only gravity and water pressure.

### Brief Description of the Drawings

The accompanying drawings, which are included to provide a further understanding of the invention and are incorporated in and constitute a part of this application, illustrate embodiments of the invention and together with the description serve to explain the principle of the invention. In the drawings:
FIG. 1. is a conceptual view schematically illustrating an unpowered pot cultivation system according to an embodiment of the present invention;
FIG. 2 is a sectional view illustrating a configuration of a device for unpowered irrigation and fertilization according to an embodiment of the present invention;
FIG. 3 is an exemplary diagram illustrating an operation state of the device for unpowered irrigation and fertilization of FIG. 2;
FIG. 4 is a cross-sectional view illustrating a pot applied to an embodiment of the present invention;
FIGS. 5 and 6 are sectional views illustrating a pot applied to another embodiment of the present invention;
FIGS. 7 to 10 are exemplary diagrams illustrating a pot applied to another embodiment of the present invention, and FIG. 7 is a front-sectional view of a pot, FIG. 8 is a plan view of a pot, FIG. 9 is a bottom view of a pot, and FIG. 10 is a side view illustrating a portion of two pots vertically stacked;
FIG. 11 is a conceptual view illustrating a pallet used for supporting a pot applied to the present invention;
FIGS. 12 and 13 are a front-sectional view and a cross-sectional view respectively illustrating a pot including a fixing means for easily fixing a rock wool applied to an embodiment of the present invention;
FIG. 14 is a conceptual view illustrating an unpowered pot cultivation system according to another embodiment of the present invention;
FIG. 15 is a sectional view illustrating a device for unpowered irrigation and fertilization according to another embodiment of the present invention;
FIG. 16 is a sectional view illustrating a device for unpowered irrigation and fertilization according to another embodiment of the present invention;
FIG. 17 is a sectional view illustrating a device for unpowered irrigation and fertilization according to another embodiment of the present invention; and FIG. 18 is an enlarged view illustrating a portion (A) of FIG. 17.

### Modes for carrying out the invention

Reference will now be made, in detail to the exemplary embodiments of the present invention, examples of which are illustrated in the accompanying drawings. Wherever possible, the same reference numbers will be used throughout the drawings to refer to the same or like parts. Hereinafter, a device for unpowered irrigation and fertilization, and an unpowered pot cultivation system using the same according to the embodiments of the present invention will be described in detail with reference to the accompanying drawings.

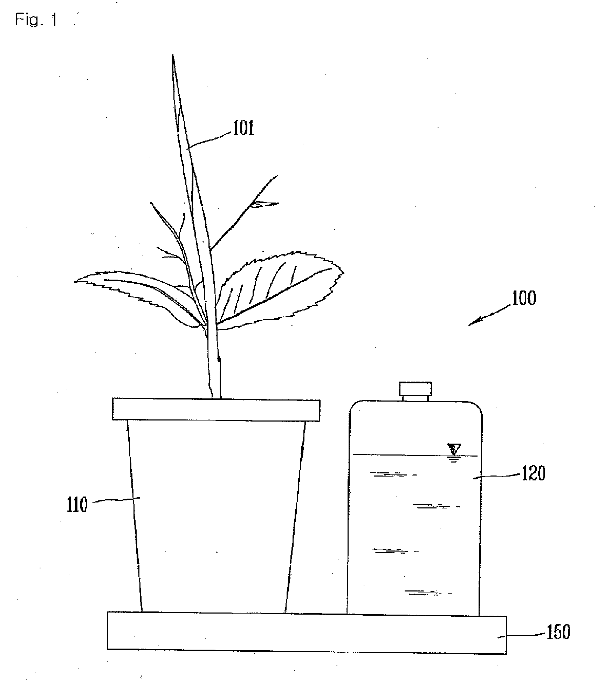

FIG. 1 is a conceptual view schematically illustrating an unpowered pot cultivation system 100 according to an embodiment of the present invention, and the unpowered pot cultivation system 100 includes a pot 110 in which a crop 101 is planted, a water tank 120, and a device for unpowered irrigation and fertilization 150 which supplies water contained in the water tank 120 to the pot 110, with an unpowered method. The device for unpowered irrigation and fertilization 150 can automatically supply water to the pot 110, and may be applied to cultivate a fruit tree (for example, a grapevine, an actinidia arguta or the like), which has a large canopy and leaf area, and has to be irrigated with much water a day. Because a grapevine, an actinidia arguta, or the like may supply a shaded area (larger than or equal to an area of 10m2/ tree), the trees can contribute to making a green space in a downtown area, and can avoid Heat Island Effect to ultimately contribute to prevention of global warming. The unpowered pot cultivation system 100 may be applied to a home, a rooftop, a parking lot, a road, a park in a downtown area, a square, a break room or the like in which the water management is difficult. For example, if 5 million vine fruit trees, which have a large canopy, are cultivated (10m2 / grapevine) in the concrete or asphalt in the downtown area, a total of the shaded area is 50 million m2, and thus, the trees can supply a sufficient shaded area in summer.

The water tank 120 may be manufactured to have various capacities depending on a water-consuming period in the crop 101 and a condition of a manager. The water tank 120 may be formed in a standardized shape, and thus, a tank, water in which is already consumed, may be easily replaced by another tank with water immediately.

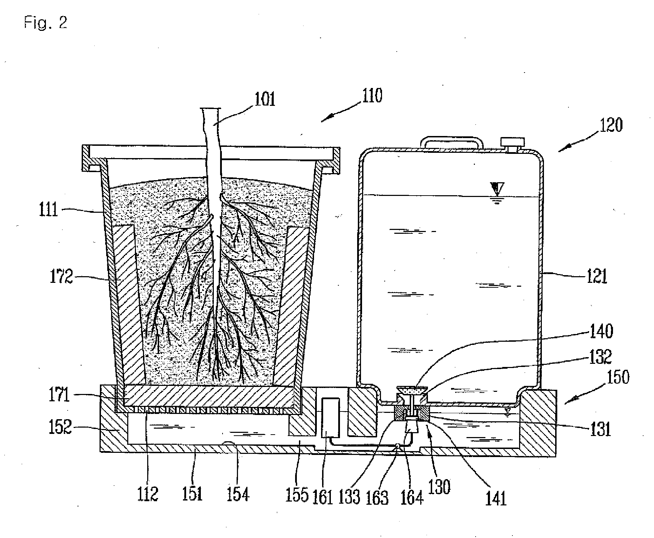

FIG. 2 is a sectional view illustrating a configuration of a device for unpowered irrigation and fertilization according to an embodiment of the present invention,

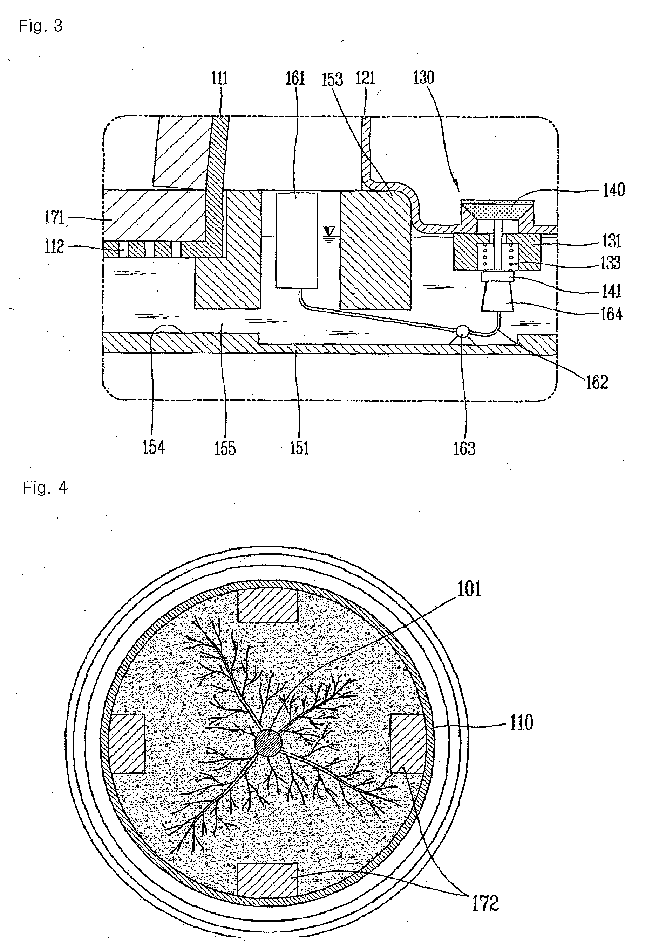

FIG. 3 is an exemplary diagram illustrating an operation state of the device for unpowered irrigation and fertilization of FIG. 2, and FIG. 4 is a cross-sectional view illustrating a pot applied to an embodiment of the present invention.

As shown in FIGS. 2 and 3, the pot 110, in which a crop 101 is planted, and the water tank 120 are disposed on the device for unpowered irrigation and fertilization 150. The pot 110 and the water tank 120 may be disposed to be adjacent to each other or may be disposed to be separated from each other by a certain interval. Moreover, the water tank 120 may be formed to surround the pot 110. For example, the water tank 120 may be formed in at '¬' shape, a '∟' shape, a donut shape which can completely surround the pot 110, or the like. The pot 110 is formed to have a space to be filled with bed soil, and a plurality of through holes 112 are formed in a bottom of the pot 110 to absorb water supplied from under the bottom. A first rock wool layer 171 may be horizontally disposed at the bottom of the pot 110 to well absorb water, and a second rock wool layer 172 is vertically disposed at a lateral side of the pot 110. A plurality of the second rock wool layers 172 may be formed along the lateral side of the pot 110 in a round direction. The rock wool may be separated from the wastes of the building material or the industrial material to be used, and thus, the rock wool may be very helpful for resources recycling and prevention of pollution.

As shown in FIG. 2, the device for unpowered irrigation and fertilization 150 includes a frame 151, and the frame 151 includes a pot holder 152 in which the pot 110 is seated, and a water tank holder 153 in which the water tank 120 is disposed. The water tank holder 153 is formed in a recess shape such that water or a nutrient solution flowing from a valve unit mounted on the water tank 120 is primarily collected.

The pot holder 152 also includes a collection recess 154 in which water or a nutrient solution can be collected. A water level of water or a nutrient solution filled in the collection recess 154 is formed to the height at which the bottom of the pot 110 may be immersed in water or a nutrient solution.

The pot holder 152 and the water tank holder 153 are connected to each other by a linking passage 155. The linking passage 155, as shown in FIG. 2, may be directly formed in the frame 151, and for another example, the linking passage 155 may be formed in a hose shape or a pipe-means shape similar to the hose shape which connect the pot holder 152 to the water tank holder 153. In this way, water collected in the water tank holder 153 moves to the pot holder 152 to be collected, and water collected in the pot holder 152 is absorbed through the bottom, contacting a surface of the water, of the pot 110.

The device for unpowered irrigation and fertilization 150 includes a water level controller 130 such that the pot 110 can consistently maintain a water level of the water or the nutrient solution collected in the collecting recess 154 of the pot holder 152. The water level controller 130 opens or closes a valve unit mounted on a lower portion of the water tank 120 to control a water level of the water on the nutrient solution collected in the collecting recess 154 such that the bottom of the pot 110 is immersed at a certain depth. A portion of the pot holder 152, in which the pot 110 is supported, may be configured with a plurality of stages, and thus, a supply of water or a nutrient solution depending on a specific condition of the various pots 110 may be freely performed.

A valve apparatus is disposed in a lower portion of the water tank 120. The valve apparatus includes a valve sheet 132, a moving member 140 and a spring 133. The valve apparatus may be directly formed in a water tank body 121, or may be formed in a cap 131 which is detachably formed in the water tank body 121. FIG. 2 illustrates an example of the latter. The valve sheet 132 may be formed of a soft material such as a rubber or a silicon rubber so as to provide sealing power which is generated by contacting the moving member 140, and may have an inclined surface, a diameter of which progressively narrows outward, such that a strong sealing-power by water pressure may be generated. One end of the moving member 140 is disposed inside the valve sheet 132 to perform a sealing operation together with the valve sheet 132, and other end of the moving member 140 is disposed outside the water tank 120 and is formed in a shape such as a button. The spring 133 is disposed between an outer end of the moving member 140 and the cap 131, and thus, the elastic force is applied to the spring 133 in a direction, toward which the moving member 140 moves to move outside. Therefore, if the other end of the moving member 140 is pushed, an inner end of the moving member 140 becomes away from the valve sheet 132, and thus, an open part of the valve sheet 132 opens. Also, if the force of pushing the moving member 140 is removed, the moving member 140 moves to an opposite direction with the operation of the spring 133, and thus, the inner end of the valve sheet 132 closes the open part of the valve sheet 132.

The water level controller 130 controls the opening and closing of the valve apparatus to consistently maintain a water level of water or a nutrient solution collected in the collecting recess 154 of the pot holder 152. Specifically, the water level controller 130 may include a floater 161 and an operation member 162. The floater 161 is formed to float on the water or the nutrient solution collected in the collecting recess 154. The floater 161 may be formed of a vacant container or a resin material having a low density, and ascends along a surface of water of the collecting recess 154 and descends together with the surface of water descending.

Referring to FIG. 3, the floater 161 is connected to the operation member 162, and a portion of the operation member 162 is fixed to the frame 151 with a pivot 163. Therefore, if the floater 161 ascends, the operation member 162 rotates clockwise with respect to the pivot 163. On the other hand, if the floater 161 descends, the operation member 162 rotates counterclockwise with respect to the pivot 163. A pushing member 164, which can push or release the above-described outer end 141 of the moving member 140, is disposed at one end portion of the operation member 162. If the operation member 162 rotates counterclockwise, the pushing member 164 pushes the outer end 141 of the moving member 140, and thus, the valve apparatus opens. On the other hand, if the operation member 162 rotates clockwise, force, with which the pushing member 164 pushes the outer end of the moving member 140, is removed, and thus, the valve apparatus closes with an elastic force of the spring 133 (see FIGS. 2 and 3).

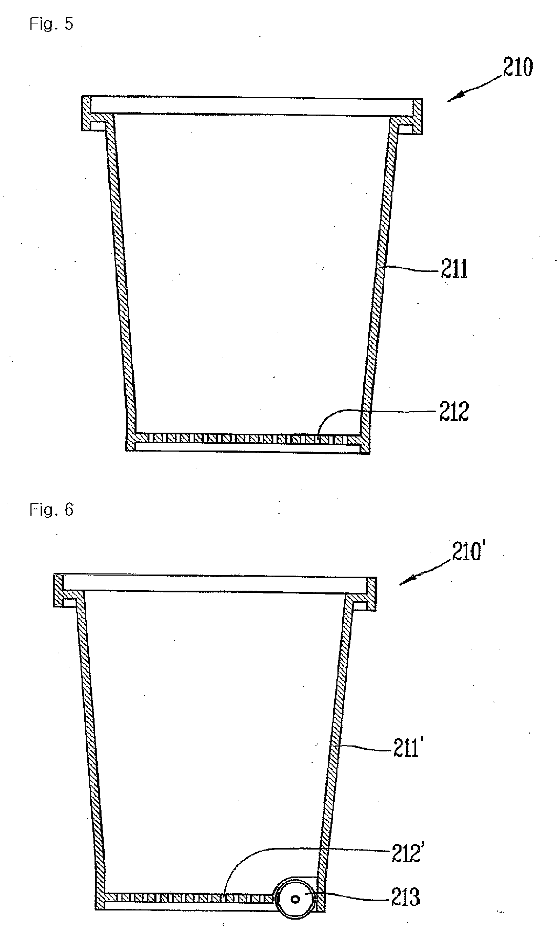

A constant water level of water or a nutrient solution, which flows from the water tank 120, in the collecting recess 154 is maintained by the operation of the water level controller 130. Therefore, water supplied to the pot 110 may be continuously managed without a manager depending on a state of the pot 110. FIGS. 5 and 6 are sectional views illustrating a pot applied to another embodiment of the present invention. The pot, as shown in FIG. 5, may be formed in a fixed type, or the pot, as shown in FIG. 6, may be formed in a moving type. That is, the fixed-type pot 210 shown in FIG. 5 includes a simple pot body 211, a bottom of which a through hole 212 is formed to drain water/a nutrient solution. On the other hand, the moving-type pot 210' shown in FIG. 6 includes a pair of wheels 213 formed in one side of a bottom of a pot body 211'. Therefore, the pot 210' may be easily moved when the pot 210 is being inclined in a direction in which the wheel 213 is formed.

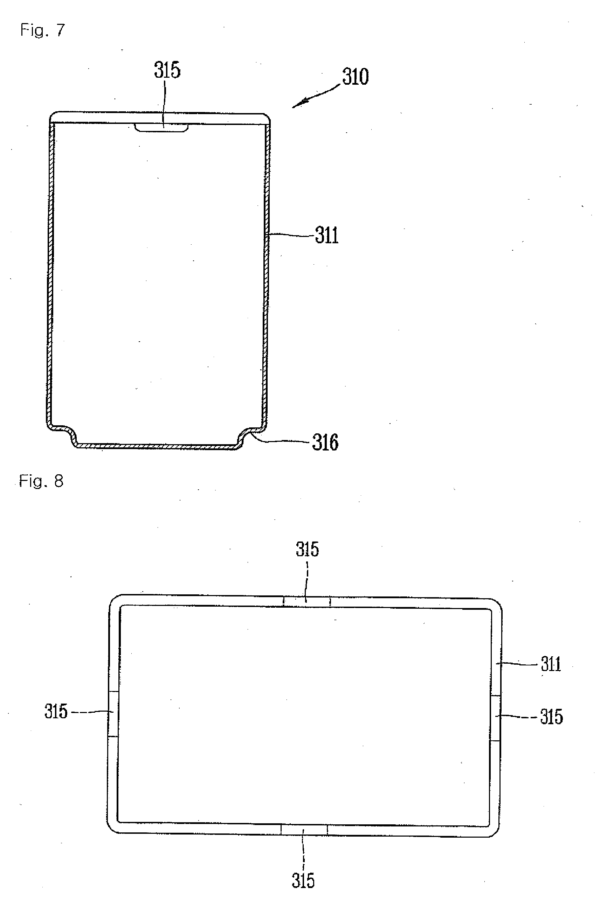

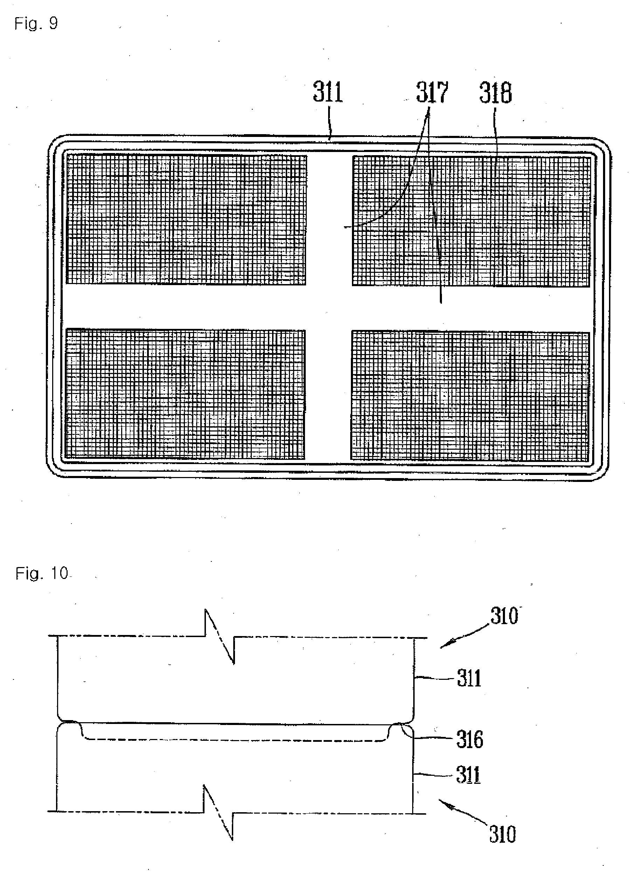

FIGS. 7 to 10 are exemplary diagrams illustrating a pot applied to another embodiment of the present invention, and FIG. 7 is a front-sectional view of a pot, FIG. 8 is a plan view of a pot, FIG. 9 is a bottom view of a pot, and FIG. 10 is a side view illustrating a portion of two pots vertically stacked.

As shown in FIGS. 7 to 10, a pot 310 is standardized such that transportation and a management are easy. That is, the pot 310 is mostly formed in a rectangular shape, includes a handle 315 formed in a certain position on an upper portion of the pot for the transportation, and an inserting recess 316 is formed in a lower portion of the pot such that the pot is easily stacked. Four handles 315 may be formed such that balance can be maintained when many people pick up the pot 310 or a machine work is performed. The inserting recess 316 is formed by the degree in which the inserting recess 316 can be inserted into a top border of other pot body 311.

A bottom of the pot 310 is formed in a mesh shape 318 for an easy drainage, and a reinforcing bar 317 is formed in a middle portion of the bottom so as to reinforce the strength of the bottom.

The pot 310 may be formed in various types by capacity or a size.

A cost and time for setting up a large-scale orchard may decrease by using the standardized pot 310, and a uniform quality and quantity may be provided by using the standardized pot 310.

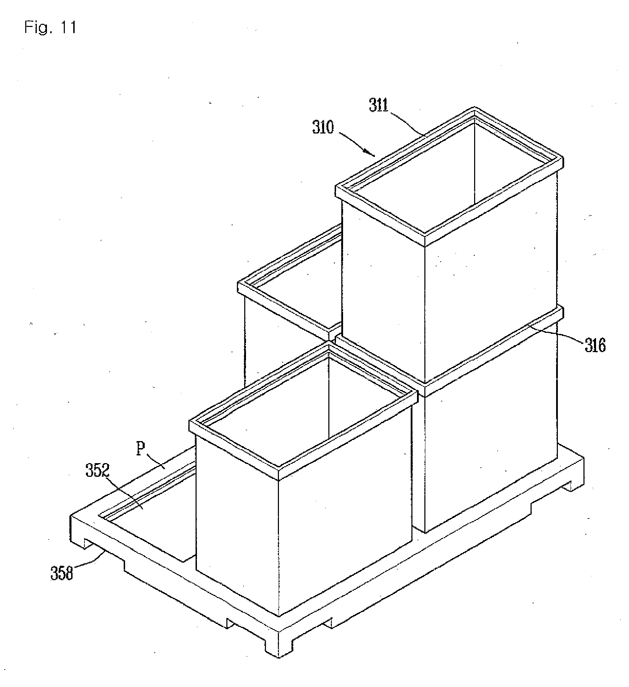

FIG. 11 is a conceptual view illustrating a pallet used for supporting a pot applied to the present invention.

The pot described with reference to FIGS. 7 to 10 may be grouped with other pots, and thus, the group of the pots may be loaded on a pallet (p). For this purpose, the pallet (P) includes a plurality of pot holders 352, and a forklift recess 358 may be formed in the pallet (P) such that the pots 310 loaded on the pallet (P) can be easily move at once. Moreover, the pot holder 352 may be formed to be connected to the above-described device for unpowered irrigation and fertilization to immediately supply the pot 310 with water or a nutrient solution.

The pallets (P) may have the standard such as a large size, a medium size, a small size, or the like by capacity, and each of the standards may be matched to a pot, which can be loaded.

If the pots are loaded on the pallet (P), it is possible to wrap the pots with a wrapping means such as a plastic wrap to carry the pots on a large scale.

In this case, it is convenient to load the pots, in each of which bed soil is already contained and a crop is already planted in the factory or the like, on a pallet, carry the pots by using a transport vehicle to the reclaimed field, unload the pots in the reclaimed field, and immediately manage the pots in the reclaimed field. Also, a cost and time for setting up an orchard may decrease.

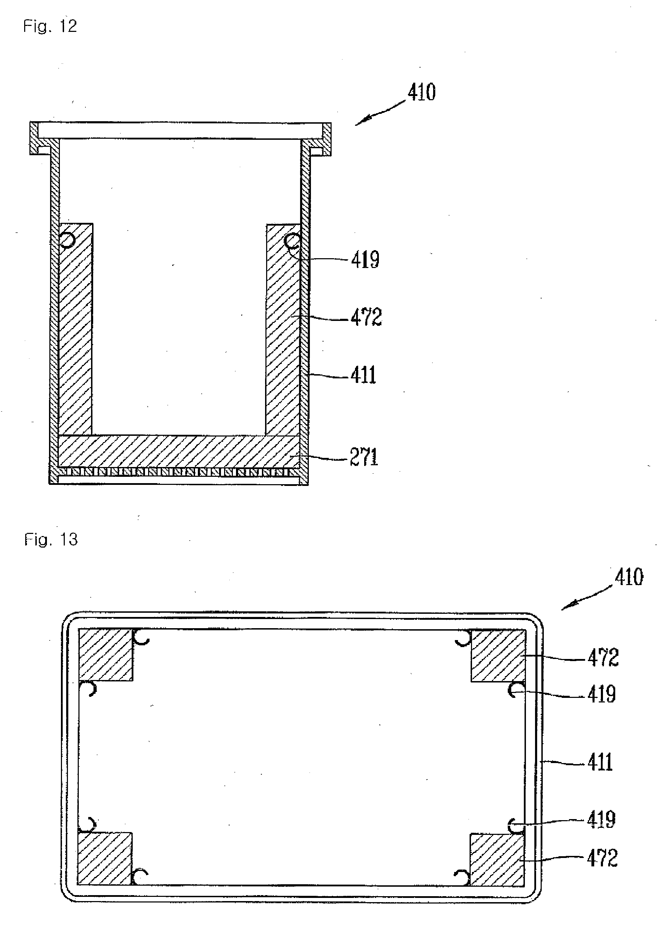

FIGS 12 and 13 are a front-sectional view and a cross-sectional view respectively illustrating a pot including a fixing means for easily fixing a rock wool applied to an embodiment of the present invention;

A rock wool may be mounted on inside a pot 410 to enhance absorptiveness and water retentivity of the pot 410. The rock wool may include a first rock wool 471, which is horizontally disposed at a bottom of the pot 410, and a second rock wool 472, which is formed in a pillar shape to be vertically disposed. In this case, a holder 419, which fixes the second rock wool 472, is disposed at an inner surface of the pot 410 such that the second rock wool 472 is not separated from the position in which the second rock wool 472 has to be mounted. The holder 419 may be formed in a clip shape or a ring shape.

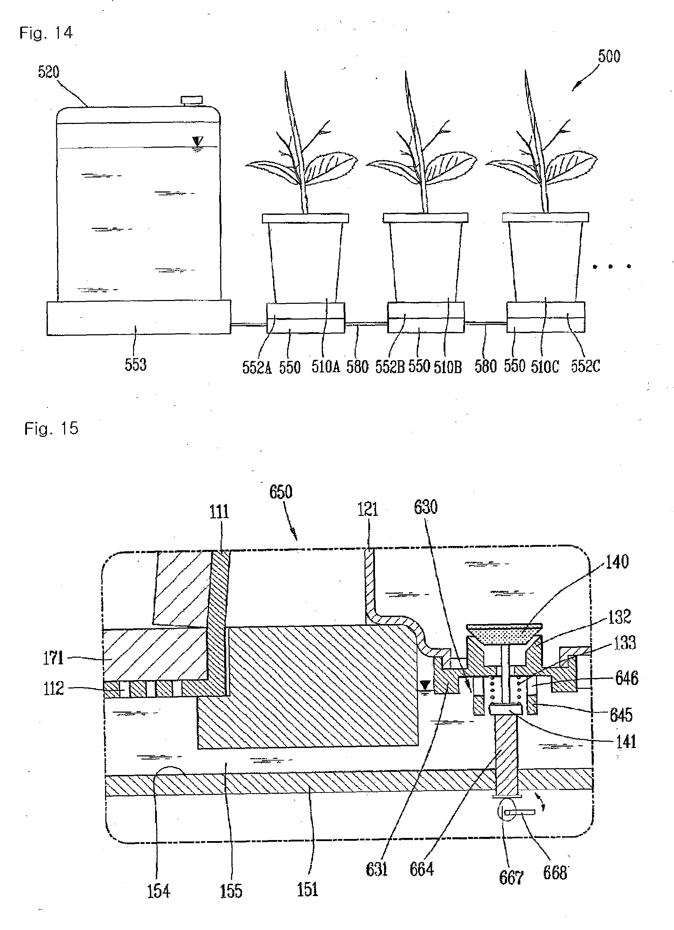

FIG. 14 is a conceptual view illustrating an unpowered pot cultivation system according to another embodiment of the present invention. The grouped pots for solving an inconvenience, which means that a water tank has to be disposed at each of the pots and the water tank has to be replaced at each of the pots, may be formed to be supplied with water by one water tank. That is, as shown in FIG. 14, the unpowered pot cultivation system 500 according to the embodiment of the present invention includes a plurality of pot holders 552a, 552b and 552c in each of which a collecting recess is formed, and each of the pot holders 552a, 552b and 552c is connected to each other by a connecting passage 580. A water level controller 550 is disposed at each of the pot holders 552a, 552b and 552c so as to consistently maintain a water level of the collecting recess. The water level controller 550 is formed to control a water level of water or a nutrient solution supplied through the connecting passage 580, and the configuration, which is applied to the water level controller described above with reference to FIGS. 2 and 3., is applied to the water level controller 550.

A water-level controlling apparatus includes a big water tank 520, in which a floater is disposed, connecting passages connected to each of pots 510A, 510B and 510C, and gutters. However, the present embodiment is not limited thereto, and therefore, the water-level controlling apparatus may include floaters disposed in each of the pots 510A, 510B and 510C.

Because a large-capacity water tank 520 is disposed on a water tank holder 553, it can be performed to supply the pots 510A, 510B and 510C with water and a nutrient solution at once.

FIG. 15 is a sectional view illustrating a device for unpowered irrigation and fertilization according to another embodiment of the present invention.

The device for unpowered irrigation and fertilization 650 shown in FIG. 15 has another technique principle to consistently maintain a water level of the water or the nutrient solution supplied to the pot 111. That is, the device for unpowered irrigation and fertilization 650 according to the embodiment of the present invention includes a cap 631 coupling to the water tank 121, and a valve apparatus and a water level controller 630 are disposed at the cap 631.

The valve apparatus includes a valve sheet 132 forming an open part of a water tank 121, a moving member 140 and an elastic member 133. One end of the moving member 140 is disposed inside the valve sheet 132 to perform a sealing operation together with the valve sheet 132, and other end of the moving member 140 is disposed outside the water tank 121 and is formed in a shape such as a button. The spring 133 is disposed between an outer end of the moving member 140 and the cap 631, and thus, the elastic force is applied to the sparing 133 in a direction, toward which the moving member 140 moves to move outside. Therefore, if the outer end 141 of the moving member 140 is pushed, an inner end of the moving member 140 becomes away from the valve sheet 132, and thus, an open part of the valve sheet 132 opens. Also, if the force of pushing the moving member 140 is removed, the moving member 140 moves to an opposite direction with the operation of the spring 133, and thus, the open part of the valve sheet 132 closes.

The water level controller 630 includes a skirt part 645 which extends at a certain length from the cap 631 around the spring 133, and an open hole 646 is formed in at least one side of the skirt part 645. The open hole 646 forms a passage through which a surrounding air is inserted into the water tank 141. If a water level is located at the position higher than that of the open hole 646, an air cannot flow into inside the water tank 121 through the open hole 646, but if the water level is located at the position lower than that of the open hole 646, an air can flow into inside the water tank 121 through the open hole 646. In the latter case, even though water pressure (gravity) operates, a force balance is maintained by a vacuum formed in an upper space of the water tank, and thus, water in the water tank 121 does not flow into outside of the water tank 121. Therefore, a water level is consistently maintained by the difference between the position of the open hole 646 and the water level, and the balance relation between the vacuum of the inner space of the water tank 121 and the gravity of the water inside the water tank.

A vacuum-applied state of the inside of the water tank 121 needs to be maintained during the use of the water tank 121, but a vacuum-applied state of the inside of the water tank 121 cannot be maintained when water is being supplemented. Therefore, the moving member 140 may be formed to close the valve sheet 132 when a protruding part 664, which is pushing an outer end 141 of the moving member 140, is optionally descended. For this purpose, the protruding part 664 may be configured with a cam mechanism 667. Therefore, if a lever 668 is rotated in a certain direction with an external force, the protruding part 664 descends. Also, if the lever 668 is rotated in an opposite direction, the protruding part 664 ascends to separate the moving member 140 from the valve sheet 132 to open the valve sheet 132. When water is supplemented into the water tank, water can be prevented from pouring at discretion by controlling the protruding part 664.

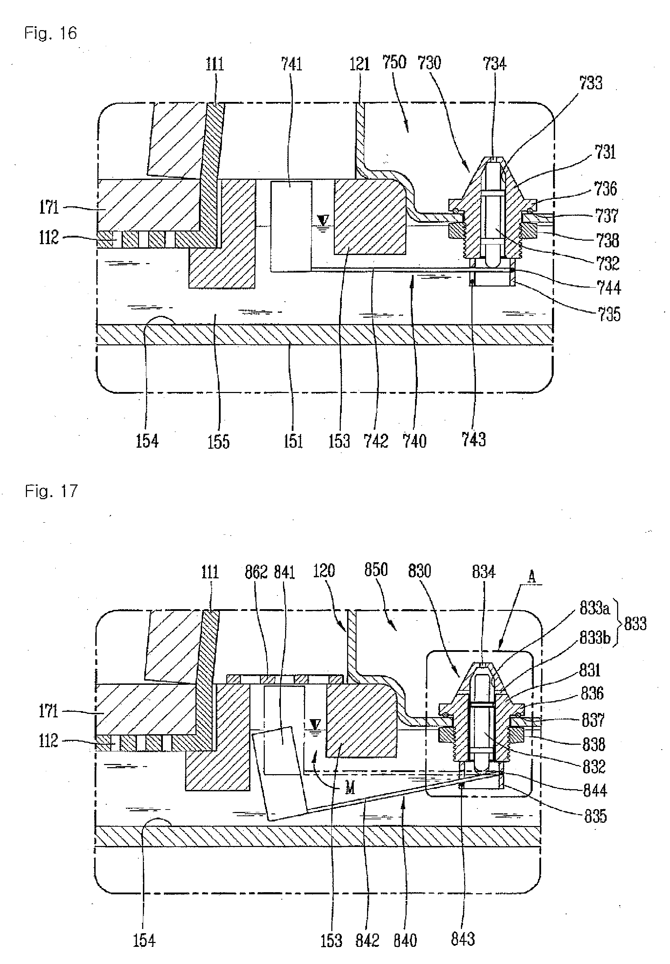

FIG. 16 is a sectional view illustrating a device for unpowered irrigation and fertilization according to another embodiment of the present invention.

Referring to FIG. 16, a device for unpowered irrigation and fertilization 750 includes a valve unit 730 and a water level controller 740, and a water level of water or a nutrient solution collected in a collecting recess 154 of a pot holder 152 may be consistently maintained with the combination of the valve unit 730 and the water level controller 740.

The valve unit 730 is disposed, under a water tank 120. The valve unit 730 includes a valve body 731 and a moving member 732.

The valve body 731 is disposed to penetrate a bottom of the water tank 120, and is detachably formed in a water tank body 721. However, the present embodiment is not limited thereto, and therefore, the valve body 731 may be disposed in other position of the water tank 120 or may be directly formed in the water tank body 721.

The valve body 731 may be formed of a material, for example, a synthetic resin, an alloy, or the like, which does not rust away in water. Moreover, the valve body 731 is formed in a circular shape, and may have an inclined surface, a diameter of which progressively narrows to an upper portion such that the valve body 731 is affected a little by water pressure.

A through hole 733 is formed inside the valve body 731. That is, a drain hole 734 is formed in the valve body 731 to drain water or a nutrient solution from the water tank 120 through the through hole 733.

The moving member 732 is disposed in the through hole 733, and one end of the moving member 732 is formed to close the drain hole 734. Specifically, one end of the moving member 732 is formed inside the through hole 733 to operate an opening and closing operation together with one end of the through hole 733 (one end of the surface of the through hole).

According to the configuration, because there are no elements obstructing the flow of the water or the nutrient solution flowing into the drain hole 734 from inside the water tank 120, a process of supplying water or a nutrient solution can be smoothly performed.

One end of the moving member 732 may be formed into an inclined surface corresponding to that of one end of the through hole 733 so as to increase a contact surface. Also, a soft member (not shown), such as a rubber, silicon rubber or the like, may be mounted on one end of the moving member 732 so as to provide strong sealing power by contacting one end of the through hole 733. The moving member 732 is formed to move toward an outside of the water tank 120 to open the drain hole 734. Generally, the moving member 732 moves with water pressure in a direction to open the drain hole 734, but the moving member 732 may have a proper weight so as to move with lower water pressure of the water tank 120. For example of the moving member 732, the moving member 732 may be a needle valve.

Other end of the moving member 732 (opposite to the one end closing the drain hole) is located outside the through hole 733. The other end of the moving member 732 is supported by the water level controller 740, and the moving member 732 may move to close the drain hole 734 or move to open the drain hole depending on a translocation of a supporting point.

A water level controller 740 may be formed to control an opening and closing of a valve unit 730 such that a water level of a collecting recess 154 can be consistently maintained. Specifically, the water level controller 740 pressures the moving member 732 to open or close the drain hole of the water tank 120, and thus, the water level controller 740 controls the water level of water or a nutrient solution collected in the collecting recess 154 and makes a bottom of the pot 110 be immersed at a certain depth.

For example, the water level controller 740 includes a floater 741, an operation member 742 and a stopper 743.

The floater 741 is formed to float on the water or the nutrient solution collected in the collecting recess 154. The floater 741 may be formed of a vacant container or a resin material having a low density, and ascends along a surface of water of the collecting recess 154 and descends together with the surface of water descending.

According to FIG. 3, the floater 741 is formed to rotate the operation member 742. Specifically, one end of the operation member 742 is fixed to the floater 741, and other end of the operation member 742 is rotatably connected to the valve body 731. As an embodiment of being rotatably connected to the valve body 731, the other end of the operation member 742 can be coupled to the valve body 731 with a pivot.

A lower protruding part 735, which is formed of a hollow object, is disposed at a lower portion of the valve body 731. The operation member 742 is coupled to one side wall of the lower protruding part 735 with a pivot, and penetrates an open part formed in other side wall of the lower protruding part 735 to extend toward a collecting recess 154.

The operation member 742 supports the moving member 732 between the either ends such that the moving member 732 moves to close the drain hole 734 when the floater 741 floats to a height higher than or equal to a predetermined water level. A supporting point of the operation member 742 and the moving member 732 is formed in a hollow portion of the lower protruding part 735.

According to the configuration, when the floater 741 descends along to a surface of water, the operation member 742 rotates counterclockwise with respect to a pivot 744. On the other hand, when the floater 741 ascends, the operation member 742 rotates clockwise with respect to the pivot 744.

If the operation member 742 rotates counterclockwise, the supporting point of the operation member 742 and the moving member 732 backs away, and thus, a valve unit 730 opens. On the other hand, if the operation member 742 rotates clockwise, the operation member 742 pushes the moving member 732 to close the valve unit 730.

According to the operation of the water level controller 740, a water level of water or a nutrient solution in the collecting recess 154 of the pot holder 152 is consistently maintained. Therefore, water supplied to the pot 110 may be continuously managed without a manager depending on a state of the pot 110. Also, because the water level controller 740 opens or closes the valve unit 730 depending on the gravity and the water pressure, a more eco-friendly device for unpowered irrigation and fertilization may be provided.

Referring to FIG. 3, a stopper 743 is disposed on a rotational path of the operation member 742 to limit a moving distance to which the moving member 732 can move toward an outside of the water tank 120. The stopper 743 is disposed at an open part of the lower protruding part 735, and is formed to protrude in a direction vertical to the operation member 742 to limit a rotation of the operation member 742.

Therefore, when water or a nutrient solution is not existed in the collecting recess 154 for installing the water tank 120 in the commencement or for cleaning the collecting recess 154, the moving member 732 can be prevented from separating from the through hole 733.

To provide a description for the valve unit 730 again with reference to FIG. 3, a circumference protruding part 736 is formed in an outer surface of the valve body 731 to be seated at one side of the water tank 120. Also, a sealing member 737 is disposed at the circumference protruding part 736 to seal the through part of the water tank 120. The sealing member 737 may be, for example, an oring. As shown in the drawings, a fastening member 738 is mounted on an outer surface of the valve body 731 such that the valve body 731 is hung on other side (opposite to a side in which the circumference protruding part is seated) of the water tank 120. For example, a screw thread is formed in the outer surface of the valve body 731, and the fastening member 738 may be a nut coupled to the screw thread.

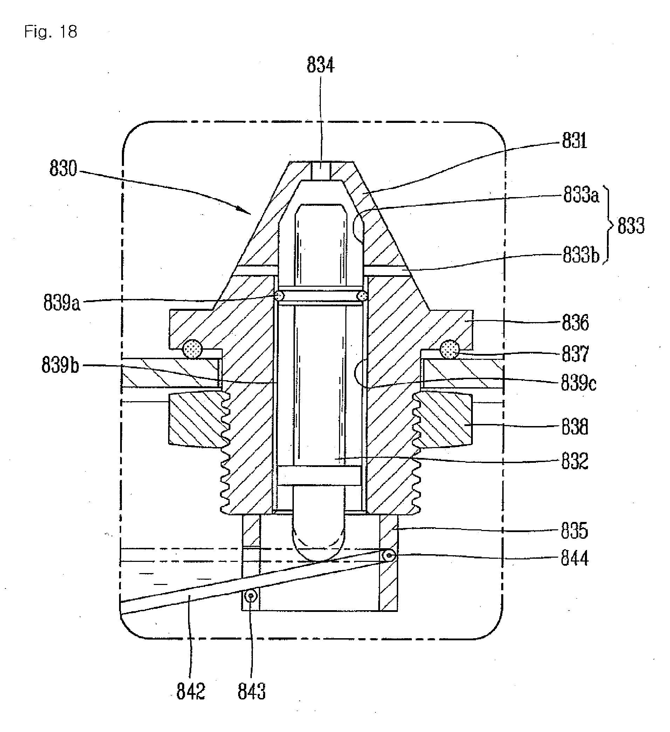

FIG. 17 is a sectional view illustrating a device for unpowered irrigation and fertilization according to another embodiment of the present invention, and FIG. 18 is an enlarged view illustrating a portion (A) of FIG. 17. The device for unpowered irrigation and fertilization 850 shown in FIGS. 17 and 18 has another technique principle to consistently maintain a water level of the water or the nutrient solution supplied to the pot 111.

As shown in FIGS. 17 and 18, a through hole 833 inside a valve body 831 includes a main through hole 833a and an assistant through hole 833b.

The main through hole 833a is formed in a lengthwise direction of the valve body 831, and a moving member 832 is slidably disposed inside the main through hole 833a. That is, the main through hole 833a is formed to be similar to the through hole 133 (see FIG. 3) described with reference to FIG. 3.

The assistant through hole 833b is formed to be extended from an outer surface of the valve body 831 to the main through hole 833a. The assistant through thole 833b mainly performs a function, which enable water to be supplied even though the drain hole 834 is blocked with a foreign matter or the like. Specifically, the assistant through hole 833b is formed to connect an internal space of the water tank 120 to the main through hole 833a.

The moving member 832 is formed to open or close the assistant through hole 833b. For example, a rubber protruding part 839a is mounted on an outer surface of the moving member 832, and the rubber protruding part 839a slides along a guide recess 839b formed in the main through hole 833a depending on a movement of the moving member 832. The rubber protruding part 839a may be formed in a ring shape.

The rubber protruding part 839a is formed to be inserted into an entrance of the assistant through hole 833b when the moving member 832 is blocking the drain hole 834 of the water tank 120. Therefore, the rubber protruding part 832a can block the entrance of the assistant through hole 833b.

Moreover, an assistant guide recess 839c may be disposed at an opposite side opposite to the guide recess 839b so as to limit a rotation of the moving member 832 in a circumference direction and to smoothly guide the sliding movement of the moving member 832.

Referring to the drawings, a portion, in which a floater is disposed, in the collecting recess 154 is formed to be open to the outside. For example, if rainwater is full filled in the pot 110 (see FIG. 2) with a heavy rain or the like, the rainwater can flow backward to the collecting recess 154. If the rainwater flows backward over a specific water level, the rainwater can flow into the outside through the open part.

A supporting member 862, which supports the floater 841 in a buoyancy direction of the floater 841, is disposed at the collecting recess 154 such that a moment applied to the moving member 842 can be decreases when the floater 841 floats to a height higher than or equal to a predetermined water level.

The supporting member 862, for example, is formed to support an upper portion of the floater 841 at a specific position. Also, the supporting member 862 may be mounted on the pot holder 152 (see FIG. 3) or the water tank holder 153, or be integrally formed in the water tank holder 153.

For example, if rainwater or the like flows backward to the collecting recess 154, a water level of the collecting recess 154 continuously increases, and thus, the force which the floater 841 applies to the operation member 842 increases. The excessive bending moment (M) may be generated to the operation member 842 by the increasing force, and this weakens durability of the operation member 842.

Because the supporting member 862 supports the upper portion of the floater 841 at a specific position, a buoyancy of the floater 841 is offset when a water level of the collecting recess 154 continuously increases with moving member 832 blocking the drain hole 834 of the water tank 120. Therefore, an outer shock applied to the floater 841 and the operation member 842 can be moderated.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

### Industrial Applicability

The device for unpowered irrigation and fertilization, and the unpowered pot cultivation system using the same have an industrial applicability.

## Claims

1. A device for unpowered irrigation and fertilization, the device comprising:
a pot holder which is provided with a collecting recess in which water or a nutrient solution is collected, and is configured such that a bottom of the pot is immersed in water;
a water tank holder on which a water tank is seated;
a linking passage which connects the water tank holder to the pot holder;
a valve unit which is mounted on the water tank to be opened and be closed by means of the movement of a moving member; and
a water level controller which is configured to move the moving member according to fluctuations in the water level of the collecting recess to consistently maintain the water level in the collecting recess.

2. The device of claim 1, wherein the water level controller comprises:
a floater which is formed to float on the water or the nutrient solution collected in the collecting recess; and
an operation member which is extended from the floater to close the valve unit when the floater floats to a height higher than or equal to a predetermined water level, and is formed to pressure the moving member with a buoyancy of the floater.

3. The device of claim 2, wherein,
the valve unit comprises:
a valve sheet to which the moving member is coupled, and which forms an open part of the water tank; and
an elastic member which provides the moving member with an elastic force such that the open part closes, and
the moving member is formed to move to inside the water tank to open the open part.

4. The device of claim 3, wherein the water level controller comprises:
a floater which is formed to float on the water or the nutrient solution collected in the collecting recess; and
an operation member one end of which is fixed to the floater, and other end of which is formed to move to remove force pushing the moving member when the floater floats to a height higher than or equal to a predetermined water level.

5. The device of claim 3, wherein the water level controller further comprises:
a skirt part which extends to under the elastic member; and
a open hole which is formed in a side surface of the skirt part such that air flows into the valve sheet.

6. The device of claim 1, wherein,
the valve unit comprises a valve body which is mounted on the water tank, and forms a open part of the water tank through a through hole, and
the moving member is disposed in the through hole, and moves toward an outside of the water tank to open the open part.

7. The device of claim 6, wherein the water level controller comprises:
a floater which is formed to float on the water or the nutrient solution collected in the collecting recess; and
an operation member one end of which is fixed to the floater, other end of which is rotatably coupled to the valve body, and which supports the moving member between either end such that the moving member moves to close the open part when the floater floats to a height higher than or equal to a predetermined water level.

8. The device of claim 7, wherein the water level controller further comprises:
a stopper which is disposed on a rotational path of the operation member to limit a moving distance to which the moving member moves toward an outside of the water tank.

9. The device of claim 1, wherein,
a first rock wool layer is horizontally disposed at a bottom of the pot, and
a second rock wool layer is vertically disposed at a lateral side of the pot.

10. The device of the claim 9, wherein a holder is formed in an inner surface of the pot to temporarily fix the second rock wool layer.

11. An unpowered pot cultivation system, comprising:
a water tank which includes a valve unit, and is able to be replaced;
a pot in which a crop is planted; and
a device for unpowered irrigation and fertilization which continuously supplies water or a nutrient solution contained in the water tank to the pot,
wherein,
the device comprises:
a pot holder which is provided with a collecting recess in which water or a nutrient solution is collected, and is configured such that a bottom of the pot is immersed in water;
a water tank holder on which a water tank is seated;
a linking passage which connects the water tank holder to the pot holder; and
a water level controller which is configured to control a opening and closing of the valve unit to consistently maintain the water level in the collecting recess, and
a first rock wool layer is horizontally disposed at a bottom of the pot, and a second rock wool layer is vertically disposed at a lateral side of the pot.

12. The unpowered pot cultivation system of claim 11, wherein,
the pot holder and the water tank holder are integrally formed in a standardized frame.

13. The unpowered pot cultivation system of claim 11, wherein,
at least one of a pairs of wheels is formed in one side of a bottom of the pot to move the pot.

14. The unpowered pot cultivation system of claim 11, wherein the water level controller comprises:
a floater which is formed to float on the water or the nutrient solution collected in the collecting recess; and
an operation member which is extended from the floater to close the valve unit when the floater floats to a height higher than or equal to a predetermined water level, and is formed to pressure the valve unit with a buoyancy of the floater.

15. An unpowered pot cultivation system, comprising:
a plurality of pot holders which is provided with a collecting recess in which water or a nutrient solution is collected, and is configured such that a bottom of the pot is immersed in water;
a connecting passage which connects each of the collecting recesses of the pot holders to each other; and
a device for unpowered irrigation and fertilization which supplies the collecting recess of each of the pot holders with water or a nutrient solution through the connecting passage, wherein,
the device for unpowered irrigation and fertilization comprises:
a water tank holder on which a water tank is seated; and
a water level controller which is formed to open or close a valve unit of the water tank such that a water level of the collecting recess is consistently maintained by supplying water or a nutrient solution to the connecting passage, and
the pot holders are formed in a standardized pallet.
